# EUROPEAN PATENT APPLICATION

(11) **EP 2 667 006 A1**
(43) Date of publication of application: **27.11.2013**
(21) Application number: 12169633.0
(22) Date of filing: 25.05.2012
(51) Int. Cl.: F02M 25/07, F02D 9/06, F02D 41/00

(54) **Engine boosting system**

(71) Applicant: Turner Powertrain Systems Limited, West Midlands Wolverhampton, WV6 0QT (GB)
(72) Inventor: The designation of the inventor has not yet been filed
(74) Representative: Jacobs, Jemma Rachel

(57) **Abstract**

An engine boosting system comprising an engine (11) having an intake manifold (12), an exhaust manifold (13), and an exhaust gas recirculation loop (17) therebetween, a storage vessel (23) in fluid communication with the intake manifold (12) and the exhaust manifold (13); and a throttle (26) located in an exhaust line (16) downstream of the exhaust manifold (13), the exhaust gas recirculation loop (17), and the connection to the storage vessel (23).

## Description

### Technical Field

This disclosure is directed to an engine boosting system and a method therefor, and in particular to an engine boosting system for use with turbocharged internal combustion engines.

### Background

Turbochargers are typically used with internal combustion engines, such as diesel engines, in order to maximise the power available therefrom. Other benefits of turbocharged engines include greater fuel efficiency and lower emissions relative to a naturally aspirated engine of similar power.

A common problem associated with turbocharged engines is that the power, fuel efficiency, and emissions-control performance are reduced during transient conditions. Transient conditions occur, for example, under a rapidly increasing or decreasing engine load. Under a rapidly increasing engine load, a turbocharger compressor may require increased torque in order to deliver an increased air flow, but such increased torque may not be available if a turbine driving the compressor is not fully spun-up. This may result in a power lag until the intake air flow increases to the requisite level.

Known turbocharged engines use accumulators to allow normally wasted energy during engine overrun or braking operating conditions to be recovered in the form of compressed air. During such operating conditions, the engine continues to turn over but no fuel is injected into the cylinders; this causes the cylinders to operate as air pumps, resulting in the compression of ambient air in the cylinders (without the addition of fuel). The compressed air is stored in the accumulator, which can then be utilised to assist the turbomachinery in developing boost at low engine speed/load conditions.

US-B-7367327 discloses a method and device for boosting an intake pipe of a turbocharged engine with compressed gas. Gases are stored in a vessel at a pressure greater than atmospheric pressure, and afterwards injected into the intake pipe in order to temporarily increase an inlet pressure during low-speed operation phases. The inventive device includes a connection for temporarily and alternately connecting the storage vessel to an exhaust manifold for recovering the gases during engine brake phases or to the intake pipe during the temporary low-speed operation phases.

US-B-8069665 discloses a method for providing air to a combustion chamber of an engine, the engine including a compressor and a boost tank selectably coupled to an intake manifold. The method includes varying a relative amount of engine exhaust in air pressurised in the boost tank based on engine operating conditions, and discharging the air pressurised in the boost tank to the intake manifold.

### Summary

According to a first aspect of the present disclosure there is provided an engine boosting system comprising: an engine having an intake manifold, an exhaust manifold, and an exhaust gas recirculation loop therebetween; a storage vessel in fluid communication with the intake manifold and the exhaust manifold; and a throttle located in an exhaust line downstream of the exhaust manifold, the exhaust gas recirculation loop, and the connection to the storage vessel.

According to a second aspect of the present disclosure there is provided a method for boosting the intake of an internal combustion engine having an intake manifold and an exhaust manifold, the method comprising the steps of: in a first mode, using a throttle downstream of the exhaust manifold to increase back pressure in an exhaust line and storing the thus pressurised exhaust gases in a storage vessel; and in a second mode, discharging the pressurised exhaust gases from the storage vessel into the intake manifold.

One exemplary embodiment of an engine boosting system is as described with reference to, and as shown in the accompanying drawings.

### Brief Description of the Drawings

Figure 1 is a schematic of an engine boosting system according to the present disclosure; and
Figure 2 is a schematic of a control system for the engine boosting system of Figure 1.

### Detailed Description

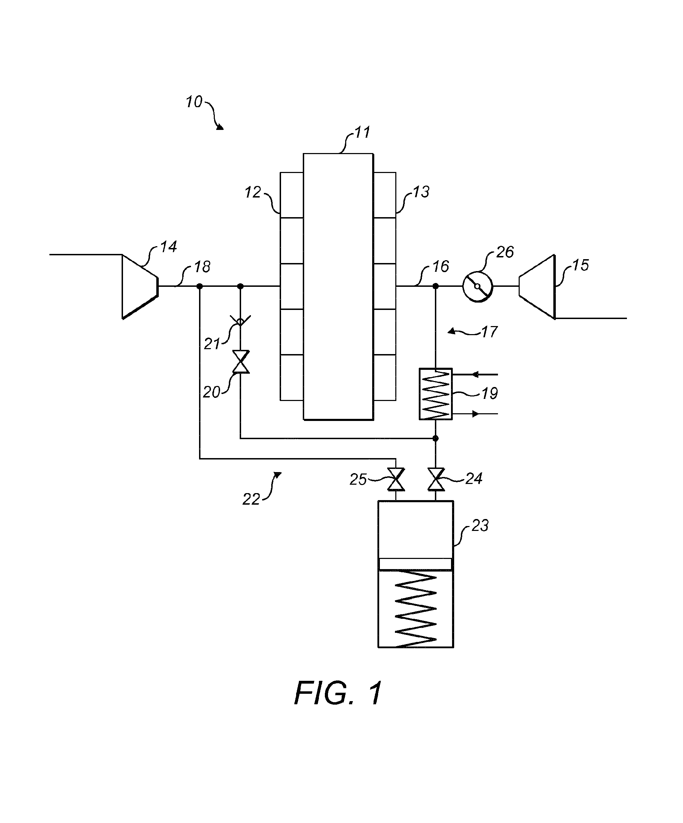

Figure 1 illustrates an engine boosting system 10 for an internal combustion engine 11, such as a diesel engine, having an intake manifold 12 and an exhaust manifold 13. As is typical in the field, the engine 11 comprises a plurality of cylinders comprising combustion chambers (not shown). This arrangement enables the intake of the engine 11 to be boosted via a compressor 14. The compressor 14 is fluidly connected to the intake manifold 12 by intake line 18 and may also be mechanically coupled (not shown) to a turbine 15. The turbine 15 may be driven by exhaust gases exiting the exhaust manifold 13 through an exhaust line 16, which is fluidly coupled to the exhaust manifold 13. Alternatively, the engine 11 may be boosted by other compression means, such as a supercharger. In one embodiment, a throttle 26 is provided in the exhaust line 16, either upstream or downstream of the turbine 15. A wastegate (not shown) may be provided so that the exhaust may be directed to bypass the turbine 15 when reduced torque is desired.

The system 10 has an exhaust gas recirculation (EGR) loop 17, which is connected to the exhaust line 16 between the exhaust manifold 13 and the turbine 15 and feeds into the intake line 18 between the compressor 14 and the intake manifold 12. The EGR loop may include a first cooler 19 for cooling the exhaust gases prior to their inclusion in the intake gases. The cooler 19 may, for example, be an air-to-air or air-to-water heat exchanger. The EGR loop 17 may be controlled via an EGR control valve 20. A non-return valve 21 may be provided in the EGR loop 17 to prevent the passage of intake gases into the EGR loop 17.

The system 10 also has a boost circuit 22, which is connected to the exhaust line 16 between the exhaust manifold 13 and the turbine 15 and feeds into an intake line 18 between the compressor 14 and the intake manifold 12. The boost circuit 22 may be connected to the EGR loop 17 downstream of the first cooler 19 (as shown in Figure 1), such that one cooler 19 may be used for both the EGR loop 17 and the boost circuit 22. Alternatively, the boost circuit 22 may be completely independent of the EGR loop 17 and may include a second cooler (not shown).

The boost circuit 22 includes a storage vessel 23. The storage vessel 23 may be any reservoir of a suitable size and configured to store compressed air under pressure for later discharge, such as an accumulator. The storage vessel 23 may be a pneumatic accumulator. First and second control valves 24,25 may be provided respectively at the inlet and outlet of the storage vessel 23, to control flow both into and out of the storage vessel 23.

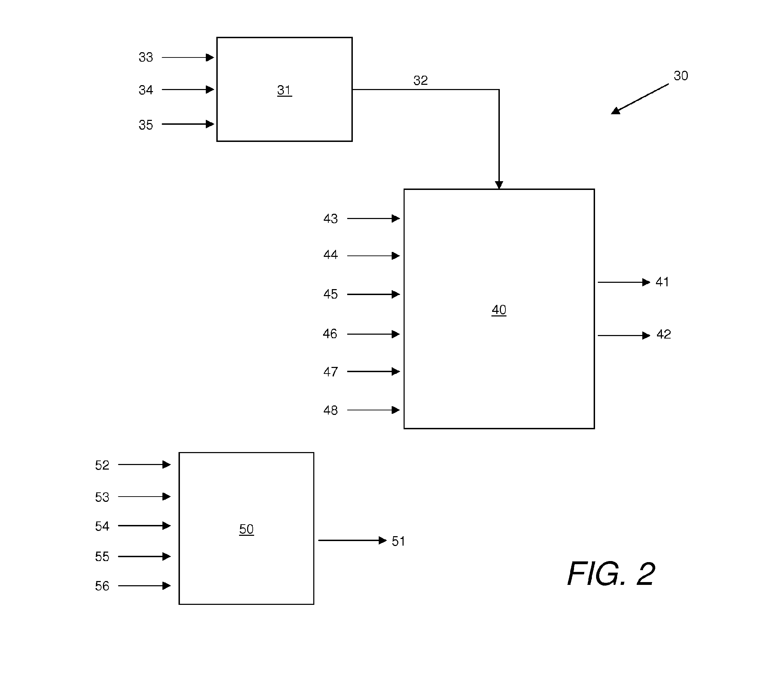

Figure 2 shows a schematic of an example control system 30 for the engine boosting system 10. Boost recovery mode selection 31 may be enabled/disabled 32 dependent on the desired engine speed 33, the actual engine speed 34, and the fuel delivery 35. If the boost recovery mode selection 31 is enabled, the boost recovery exhaust throttle controller 40 may determine the desired position of the exhaust throttle 41 (%) and the accumulator inlet valve position 42 (%). This determination may be based on inputs relating to the actual position of the throttle 43, the target 44 and maximum 45 exhaust pressures as determined by an exhaust pressure sensor 46, and the minimum 47 and maximum 48 throttle positions. Separately, a boost recovery accumulator controller 50 may determine the position of the accumulator outlet valve 51 based on inputs relating to the turbocharger speed 52, the desired 53 and actual 54 inlet manifold air pressure (IMAP), the exhaust gas recirculation mass flow 55, and the fuel delivery 56.

### Industrial Applicability

The engine boosting system 10 has industrial applicability in the field of engines, and in particular internal combustion engines, and may be used on a variety of different internal combustion engines, such as diesel engines. The engine boosting system 10 is particularly suited to be applied to boosted engines, such as engines including turbochargers.

During, for example, engine braking or overrun conditions, the engine continues to turn over but no fuel is injected into the cylinders; this causes the cylinders to operate as air pumps, resulting in the compression of air inside the cylinders. At the same time, the exhaust throttle 26, EGR control valve 20 and second (outlet) control valve 25 close, and the first (inlet) control valve 24 opens. This causes the compressed air from the cylinders to pressurise the exhaust manifold 13, and the positioning of the valves 24,25 means that the exhaust pressure causes the accumulator 23 to fill with compressed fresh air.

When engine braking/overrun conditions finish, the first (inlet) control valve 24 closes and the exhaust throttle 26 opens. The engine 11 and EGR loop 17 may function normally in this configuration.

During periods of boost limited operation, for example transient and low speed conditions, the amount of intake air available from the compressor 14 may be inadequate. In such situations, the second (outlet) control valve 25 can open and can regulate the pressurised fresh air stored in the accumulator 23 into the inlet manifold 12, thereby assisting the compressor 14 in developing boost.

The system 10 enables the capture of normally wasted energy during engine overrun or braking conditions and uses it to develop pressurised air to assist in boosting the engine 11. This can help in overcoming the performance problems caused by downsizing and downspeeding internal combustion engines, which is considered as an effective way of increasing engine efficiency.

## Claims

1. An engine boosting system comprising:
an engine having an intake manifold, an exhaust manifold, and an exhaust gas recirculation loop therebetween;
a storage vessel in fluid communication with the intake manifold and the exhaust manifold; and
a throttle located in an exhaust line downstream of the exhaust manifold, the exhaust gas recirculation loop, and the connection to the storage vessel.

2. An engine boosting system according to claim 1, wherein
the connection between the storage vessel and the intake manifold is independent of the connection between the exhaust gas recirculation loop and the intake manifold.

3. An engine boosting system according to any one claim 1 or claim 2, further comprising a cooler operable to cool gases in the exhaust gas recirculation loop.

4. An engine boosting system according to any one of the preceding claims, further comprising a cooler operable to cool gases directed to the storage vessel.

5. An engine boosting system according to any one of the preceding claims, wherein a first control valve is provided at an inlet to the storage vessel and a second control valve is provided at an outlet from the storage vessel.

6. An engine boosting system according to any one of the preceding claims, wherein the exhaust gas recirculation loop comprises a control valve.

7. An engine boosting system according to any one of the preceding claims, wherein the exhaust gas recirculation loop comprises a non-return valve.

8. An internal combustion engine comprising an engine boosting system according to any one of claims 1 to 7.

9. A method for boosting the intake of an internal combustion engine having an intake manifold and an exhaust manifold, the method comprising the steps of:
in a first mode, using a throttle downstream of the exhaust manifold to increase back pressure in an exhaust line and storing the thus pressurised exhaust gases in a storage vessel; and
in a second mode, discharging the pressurised exhaust gases from the storage vessel into the intake manifold.

10. A method according to claim 9, wherein the first mode and the second mode operate simultaneously.

11. A method according to claim 9 or claim 10, wherein in the first mode the pressurised exhaust gases are additionally or alternatively fed through an exhaust gas recirculation loop.

12. A method according to any one of claims 9 to 11, wherein in the first mode the pressurised exhaust gases are cooled prior to storage.

13. A method according to any one of claims 9 to 12, wherein the internal combustion engine is an engine according to any one of claims 1 to 7.
